# EUROPEAN PATENT APPLICATION

(11) **EP 4 603 751 A1**
(43) Date of publication of application: **20.08.2025**
(21) Application number: 24206102.6
(22) Date of filing: 11.10.2024
(51) Int. Cl.: F23J 3/00, F27D 25/00, F28G 1/16, F23J 3/02, F28G 15/04, F22B 37/52, B08B 3/02

(54) **A METHOD OF CONTROLLING A SOOTBLOWING SYSTEM OF A FURNACE, AND A SOOTBLOWING SYSTEM**

(30) Priority: 13.02.2024 SE 2450140
(71) Applicant: Wave Impact Heat Management AB, 172 63 Sundbyberg (SE)
(72) Inventor: LINDER, Pontus, Stockholm (SE); DAHLÉN, Erik, Göteborg (SE); HOLMBERG, Johannes, Saltsjö-Boo (SE)
(74) Representative: Bjerkén Hynell KB

(57) **Abstract**

This invention relates to a sootblower arrangement for a boiler/furnace, comprising a base frame (10), a moveable carriage (14) supported by the frame (10), a motor (2) for moving the carriage (14), a lance tube (11) mounted on the carriage (14) to be insertable into and retractable from the boiler/furnace, said lance tube (11) having at least one nozzle (12), and a steam feed tube (50, 51) connected to the lance tube (11) for feeding sootblowing steam to be ejected through said at least one nozzle (12) into the boiler/furnace, said steam feed tube (50, 51) having a first valve (3) for admitting steam through said at least one nozzle (12), when the carriage with the lance tube (11) is in an active position, i.e. during retraction and/or introduction of the lance tube (11), wherein there is arranged an adjustment arrangement (7) including a movable member (70), arranged to be movable between a first and a second end position, which movable member (70) is mechanically connected by means of a pivot device (75) to a control member (32) arranged to move/position a closure means (30) of said valve (3) into an open or closed position, facilitating closure of said valve (3) also when the lance tube (11) is in its activated position, **wherein** said adjustment arrangement (7) includes adjustment arrangement (7) includes an adjustable member (76) that by means of a second power mechanism (78) arranged to operate independently in relation to said first power mechanism (71),and arranged to position said pivot device (75) in at least one intermediate position between said first and second end positions.

## Description

### TECHNICAL FIELD

The present invention relates to a system and method of a sootblowing system of a furnace, said sootblowing system including a sootblower including a frame, a moveable carriage supported by the frame, a motor for moving the carriage, a lance tube mounted on the carriage to be insertable into and retractable from the recovery furnace, said lance tube having at least one nozzle, and a steam feed tube connected to the lance tube for feeding sootblowing steam to be ejected through said at least one nozzle into the furnace, said steam tube having a valve for admitting steam through said at least one nozzle.

### BACKGROUND ART

Furnaces comprise heat exchanger parts, wherein heating surfaces get covered with combustion deposits, i.e. slag, ash and/or soot, which decrease the efficiency of the recovery furnace, particularly by reducing heat transfer in the furnace. This is especially significant for recovery furnaces within the pulp industry, which are used as a chemical recovery reactor and for the production of steam, e.g. for generation of electricity, since due to operating as a chemical reactor, the combustion conditions are such that the heating surfaces of the furnace get covered extremely rapidly. In addition to soot, the flue gases then contain inorganic chemicals, which condense on the heating surfaces of the recovery furnace, which may sinter and create hard to remove deposits. The invention is not limited to recovery furnaces but may be applied also to other kind of furnaces, as is well understood by the skilled person. However, in the following the invention will be clarified, without any limiting effect, with focus in relation to recovery furnaces.

Recovery furnaces require continual cleaning of the heating surfaces by means of special cleaning apparatus, called sootblowers. The sootblowers clean the heating surfaces with high pressure steam, and generally about 2-10 % of the steam production of the furnace is used for cleaning the recovery furnace. If the time between successive cleanings is too long, the dust-like particles get harder and/or sinter, and the deposits will be harder to remove.

Generally, the sootblowing system comprises about 40-80 sootblowers and is a very expensive subsystem of a recovery furnace. As a rule, each individual sootblower is activated at regular intervals, generally between about 45-300 minutes. A correctly operating sootblowing system is of vital importance to the total economy of a mill, as the value of the consumed steam is high, and also as it is not uncommon that the mill has to stop its entire production of pulp for water washing the heating surfaces of the recovery furnace.

For a long time, the mills have desired to reduce the steam consumed by sootblowing. However, in principle this has been very difficult, as reduced steam consumption also has meant reduced soot removal efficiency. In many applications reduced soot removal efficiency is unacceptable, when you seek to attain high/secure/increased availability on the recovery furnace. Thus, there is a long-felt demand for a solution that makes it easy to save steam and simultaneously increase the efficiency of the sootblowing.

A principle description of a recovery furnace is found in WO 96/08677, which also discloses the use of sootblowers for removing heavy deposit, which is wholly or partially sintered, from the heating surfaces in a recovery furnace.

In a one prior art concept, as depicted in US 5416946, the sootblowers are operated with a reduced pressure (often in combination with a higher speed) during the return stroke or vice versa. As the pressure reduction between the steam source and the sootblowers is carried out at one common, single location, the sootblowers have to be operated one by one. This method saves steam, but simultaneously it reduces the efficiency of the sootblowing system somewhat. Similar solutions are also known from JP-2005147581-A and US 0060065291. From JP-2002213729-A there is known a mechanical solution that opens the poppet valve in two steps by using two claws instead of one.

In WO 2008057039 a concept wherein, there is provided means to arrange for controlled steam supply merely during a limited time period, whereby reduced consumption of steam for sootblowing in recovery furnaces may be achieved without reducing the soot removal efficiency.

However, also this latter described concept present some disadvantages.

### DISCLOSURE OF THE INVENTION

The object of the present invention is to further optimize sootblowing in furnaces without reducing the soot removal efficiency, which is achieved by a method and system respectively, according to the claims of the invention.

Thanks to the invention improvements may be achieved regarding efficiency and/or reliability for operation of a furnace.

Further aspects of the invention are defined in the independent claims and in the detailed description, respectively, wherein is to be noted that some of the technical solutions presented in the description and/or figures may be used without any limitation to the system defined in the independent claims, and may therefore be subject for their own protection by means of one or more divisional application/s.

### BRIEF DESCRIPTION OF THE DRAWINGS

In the following, the invention will be described in more detail with reference to preferred embodiments and the appended drawings, wherein:
- Fig. 1: is a schematic view of one embodiment of a sootblower with an adjustment arrangement in accordance with the present invention and having a lance tube in an end position and just starting its insertion into the recovery furnace,
- Fig. 2: is a more detailed view of chosen parts of the sootblower of Fig. 1,
- Fig. 3: is a schematic view of a modified embodiment shown in Fig. 2, wherein a specific adjustment mechanism is integrated and used in connection with the invention,
- Fig. 4: shows an exemplifying embodiment regarding optimized operation of a soot blower in accordance with the invention, and,
- Fig. 5 and 6: are schematic views of a further embodiment of an adjustment arrangement that may be used in connection with the invention, and,
- Fig. 7: schematically shows an embodiment of a pneumatic circuit that may boost the function of interconnected devices to control the function of according to the invention, and

### DETAILED DESCRIPTION OF THE INVENTION

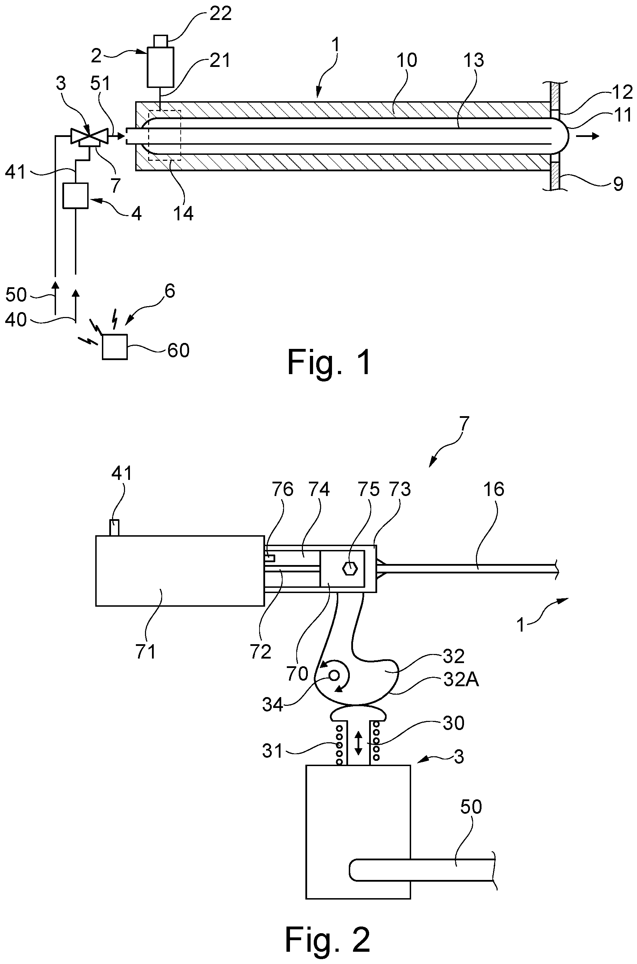

Fig. 1 shows a schematic view of one embodiment of a sootblower arrangement 1 having a lance tube 11 retracted into an end position and just starting its insertion into a furnace, the outer wall of which is designated 9. The sootblower arrangement 1 includes a frame 10, a moveable carriage 14 supported by the frame 10, and a motor 2 for moving the carriage (in a manner not shown) via a drive shaft 21. The lance tube 11 is mounted on the carriage 14 to be insertable into and retractable from the recovery furnace, and it has at least one but preferably two or more nozzles 12 for ejecting steam. The lance tube 11 surrounds an interior steam feed tube 13, to which an external steam feed 50, 51 is connected for feeding sootblowing steam to be ejected through said at least one lance tube nozzle 12 into the furnace, when a valve 3 is activated.

The lance tube 11 generally rotates during insertion and retraction and may be rotationally driven by the motor 2 or by a separate drive. Further, the speed in one direction may be higher than in the other direction, e.g. the retraction speed may be higher than the insertion speed. A phase direction sensor 22 may be arranged in connection with the motor 2, which sensor 22 may sense the phase direction, i.e. the direction of rotation of the motor 2, and thereby may be used to detect the direction of movement of the lance tube 11. A control system 6, preferably including a server 60, is used to control the sootblowing based on detected sensor signals detected from applied sensors.

Preferably, the sootblower 1 has at least one, preferably at least two, limit sensing device/s (not shown) to sense each end position of the lance tube 11, e.g. mechanical switches and/or optical switches and/or inductive sensor switches, etc. The signals from these are transferred to the control system 6 to determine lance tube travel direction and/or position, which may be used to control a desired operation, e.g. to allow a reduced amount of steam in some positions.

Generally furnaces are equipped with poppet valves 3 that are mechanically operated, normally mechanically controlled by a device connected to the carriage 14, which device opens the poppet valve 3 when the carriage leaves its innermost position (moves into its activated stage). A traditional poppet valve 3 as such may not be used to achieve a function according to the invention, since it may merely provide either fully open or fully closed. However, in accordance with one aspect of the invention the poppet valve 3 has been fitted with an adjustment arrangement 7 that is pneumatically operated by means of a pressure source 40. The adjustment arrangement 7 comprises a moveable member 70 (see Fig. 2) that may facilitate adjustment of the poppet valve 3 independent of the position of the carriage 14.

In Fig. 2 there is shown a specific embodiment of an adjustment arrangement 7 as schematically described in relation to Fig.1. As already mentioned in connection with Fig. 1, this kind of solution is based on using a poppet valve 3 in combination with a adjustment arrangement 7. The poppet valve 3 will normally be in its closed position by means of a spring 31 urging the valve stem 30 into a closing position. A control member 32, here in the form of a pivot lever 32 (referred to as lever below), is connected to the movable member 70 to facilitate movement/positioning of the valve stem 30 (downwardly in Fig. 2) and thereby open the valve 3, when the lever 32 is pivoted to the right in Fig. 2. In many known installations the activation of the lever 32 is performed by start of the lance tube, e.g. by means of a rod device 16, that is caused to move to the right and be in a locked position (by a locking device, not shown) once the carriage 14 and the lance tube 11 have left the resting position. Hence the rod 16 will remain in that locked position until the carriage and lance tube 14, 11 returns and unlocks it.

By means of the adjustment arrangement 7 the rod 16 is not attached directly to the lever 32 but to a frame device 73, which in turn is fixedly attached to a piston/cylinder unit 71, which provides a first power mechanism. The frame device 73 extends longitudinally and coaxially with the piston cylinder unit 71 and has a slot 74 formed therein. The moveable member 70 is slideably arranged within the slot 74. The moveable member 70 has a body with an extension that is substantially less than the length of the slot 74 to allow for the moveable member 70 to move within the slot. The moveable member 70 is fixedly attached to the piston rod 72 of the cylinder piston unit 71. Accordingly, the moveable member 70 may be moved forth and back within the slot 74 by means of the piston cylinder unit 7.

Further the whole piston cylinder unit 71 and moveable member 70 may be moved forth and back by means of the rod 16. The lever 32 of the poppet valve 3 is at its top end pivotally connected to an attachment device 75 which in turn is fixedly attached to the moveable member 70. Further there is shown a connection 41 for supply of pressurized air to the piston cylinder unit 71 to facilitate activation of the piston cylinder unit 7, which normally is in an end position urged by the spring 31 urging the stem 30 of the valve 3. (in Fig. 2 the piston cylinder is shown activated, i.e. having pushed the movable member 70 to the right-hand end of the slot 74)

Further, according to one aspect of the invention there is also arranged an adjustable member 76, which is operated by a second power mechanism arranged to operate independently in relation to said first power mechanism 71 and which may arrange for adjustable positioning of the moveable member 70 during the time when the soot blower is active, by stopping supplying pressure to the piston cylinder 71 whereby the spring 31 of the valve 3 will urge the movable member to the position where it is stopped by the adjustable member 76, such that either no steam is supplied or any smaller amount than for a fully opened valve, as decided by the actual position thereof.

The function of the embodiment shown in Fig. 2 is as follows. When carriage and lance tube 14, 11 are in their resting position the rod 16 will be positioned in its outermost position and also fixed in that position. In this position the frame device 73 and the moveable member 70 are according to this embodiment arranged such that the poppet valve 3 cannot be opened, i.e. the poppet valve 3 will remain in its closed position regardless in which position the moveable member 70 is put within the slot 74.

However, once the soot blower 1, i.e. carriage 14 and the lance tube 11, starts to move (which in this case will be in the right-hand direction, seen in Fig. 2) the rod 16 will move to its activated position, i.e. moving to the right, to its innermost position, where an existing locking device will lock the carriage/rod 16, and hence having moved also the piston unit 71 to a more right hand position. Now the poppet valve 3 may be activated by means of having the upper part of the lever 32 pivoted to the right around it's pivot point 34 such that the cam surface 32A will press the stem 30 downwards . Hence, when the moveable member 70 is activated by the cylinder piston unit 71 the poppet valve 3 will open fully, i.e. the stem 30 will be pressed down and steam will enter into the lance tube 11 via the piping 15. Hence the valve 3 will be fully opened when the moveable member 70 is in its fully activated position, i.e. in the end position of the slot 74 furthest away from the cylinder piston unit 71. Preferably, the piston cylinder 71 is activated at once, in connection with start of the sootblower.

If gas/air supply via supply connection 41 to the cylinder/piston unit 71 thereafter is stopped the piston rod 72 will be moved to the left by a pivoting action of the lever 32, urged by the stem/spring 30/31 and since the stem 30 has moved upwards, the upper part of the pivot lever 32 has been moved to the left providing a non-fully opened flow of steam, i.e. either fully closed or slightly opened depending on the position of the adjustable member 76.

Hence, by controlling the supply of pressurized gas/air to the connection 41 any desired mode of the poppet valve 3 may be achieved, once the rod 16 is in its active, innermost position. For instance, the control system may be arranged to supply pressurized gas/air into supply connection 41 all the time when the carriage and lance tube 14, 11 moves inwards, to keep the poppet valve 3 open all the time during the travel inwards. Once the end position is reached a sensor device may supply a signal to the control unit 6 which will cause supply of pressurized gas/air to be stopped, urging the movable member 70 to be moved into contact with the adjustable member 76 thereby providing a reduced steam supply corresponding to that position of the movable member 70/lever 32/stem 30. As is well understood, it is also possible to use the adjustable member 76 to position the movable member 70 in an intermediate position, during any stage when the soot blower is active, e.g. during a part of the forward stroke and during the whole return stroke, if desired.

In this regard it is well understood by the skilled person that thanks to the invention merely a limited number of the lance tubes 11 may be supplied with the cooling steam whereas some others not, etc, e.g. depending on where in the recovery boiler the lance tube 11 is being used. As is well established, some places within the boiler are much hotter than others and accordingly cooling is not necessary always and not everywhere. Thanks to the invention this may be individually optimized for each boiler to merely allow supply of cooling steam where it is desired necessary, thereby saving further steam.

In a modified embodiment the rod 16 must not be connected to a movable part of the soot blower 1 but attached (e.g. welded) to a fixed part of the soot blower 1. By means of using an adjustable member 76 in accordance with the invention the advantages providing a simple solution for enabling optimized steam supply levels may still be obtained. This may indeed also be an advantage that may be significant in some embodiments, since the locking device that locks the movable carriage of the soot blower in many installations may be deficient after years of use and may therefore cause problems. Accordingly, especially in such situations it is a great advantage to "bypass" the need of any locking mechanism of the rod 16 and instead merely rely on adjustability by means of the invention using the adjustable member 76 that may be positioned in at least three positions.

Hence, this individually controlled operating method of the soot blowers may cut the steam consumption significantly and makes it possible to operate a plurality of sootblowers simultaneously, independently of the travel direction of one another, which provides a significant advantage in accordance with the invention.

The sootblowers 1 may be operated at regular intervals to continually remove deposits from the heating surfaces. The deposits, which have a dust-like consistency when landing on the heating surfaces, may be sintered by the heat during the cleaning intervals. By parallel optimized operation of a plurality of sootblowers 1 in parallel, the time between the cleaning occasions may be made more frequent, so that sintered deposits may be omitted, which may result in a significant efficiency increase.

It is evident for the skilled person that also other mechanical connections may be used instead of a rod 16, e.g. some kind of wire or chain mechanism to position the frame device 73 in a corresponding manner as the rod 16.

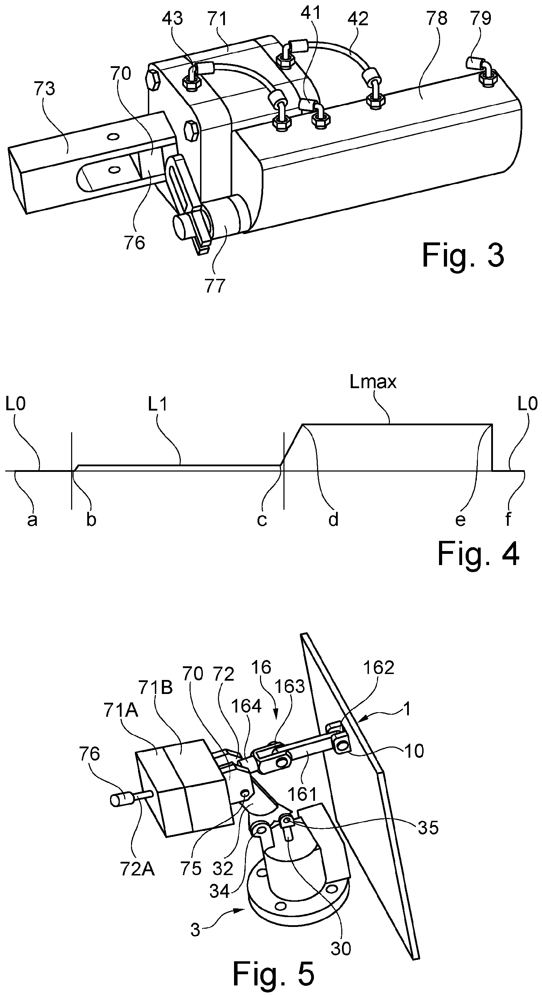

In Fig. 3 there is shown a preferred embodiment of an adjustment arrangement 7 including a specific adjustment mechanism 78 that makes it possible to stepless adjust the position of the adjustable member 76 (which in this embodiment is integral with the movable member 70) in real time and by means of having a communication device arranged within the housing, preferably in remote communication with the control unit 6. As shown, the adjustment mechanism 78 is pneumatically operated implying that the same pressure source may be used as for the piston cylinder 71. It is shown that the supply pressure is provided to one of the inlet couplings at 41 of the adjustable device 78. Further it is shown that there are two connecting pressure lines 42, 43 enabling control of the piston cylinder 71.

A movable spring retracted protruding member 77 protrudes out from the adjustment mechanism 78 which in turn is connected to the adjustable member 76. Accordingly, the adjustment mechanism 78 may continuously receive input regarding the position of the movable member 70, which enables remote control of the position of the movable member, by means of a balancing pressure valve within the adjustment mechanism, such that desired pressures may be provided to the cylinder 71 via output lines 42, 43, i.e. to position the movable/adjustable member 70/76 in a desired position.

Thanks to the combination of features as shown in Figs. 2 and 3 it is possible to optimize the supply of steam independently and in a flexible manner for each soot blower 1, i.e. also individually to adapt to each optimized need for each individual soot blower.

In Fig. 4 there is shown a preferred method for operating a soot blower in accordance with the invention wherein it is shown the operation of a soot blower from start a) to end f) and that different levels L0, L1, Lmax of supply of steam may be arranged for during the operation of the soot blower.

To start with it is preferred that the sootblower does not at all supply any steam until its front end has entered the furnace. Accordingly, there is preferably a first step from a)-b) wherein a level of steam supply L0 is provided that is zero or at least near zero. This is achieved as soon as the carriage with the lance tube has entered into an active position e.g. the rod 16 and the movable member 70 has pivoted the lever 32 into its operating position. The adjustable member 76 is then directly controlled to be moved into a retracted position, and thereby allowing the lever 32 to pivot leftwards and locking the valve 3 implying that no steam is supplied.

Once the end of the lance tube 11 has reached into the furnace at timing b) the adjustable member 76 is moved slightly forwards and thereby pivoting the lever to slightly open the valve 3 providing a reduced supply of steam L1 at the relatively low level that is at least below 50% of the maximum level Lmax for supply of steam. During this stage the supply of steam is optimized to keep the lance tube cooled at a sufficient level and also to drain condensate that may have accumulated within the lance tube 11.

It is to be noted that preferably the operation of the adjustable member 76 is not performed in a stepwise manner but is preferably moved in a continuous manner, i.e. relatively slowly, which provides the advantage that the steam pressure is slowly increased, preferably less than 10 bar/s, without any substantial pulsating/sudden increase, which will have a positive effect in regard to sealings used, which otherwise may be damaged if being exposed to sudden increase of pressure supply.

At position c) the lance tube reaches its innermost position within the furnace and starts reversing. At this moment it is desired to obtain a soft increase of the steam supply up to desired maximum level Lmax. This is achieved by continuously and relatively slowly moving the adjustable member 76 further away from the piston cylinder 71 to position the lever 32 in a position to provide the desired maximum steam supply, i.e. Lmax. It is to be noted that this maximum steam supply, Lmax may be chosen to be different for different soot blowers, i.e. may be individually controlled to adjust the steam supply to be optimized for each soot blower depending on the need of steam supply for optimizing at the position for each soot blower from an individual perspective. This in turn may be achieved by use of sensors/ocular inspection devices that may provide feedback to the control system 6 for optimizing the level of steam supply for that heat exchange surface for which the soot blower is cleaning.

Further, the soot blower is thereafter maintained at the optimized level of steam supply, L max, from d)-e) which corresponds to a position where the end of the soot blower has reached its final cleaning position and there is no further need for supply of cleaning steam and therefore the adjustable member 76 may be allowed to move into a position that moves the lever 32 into a position where no steam, L0, is supplied.

It is to be noted that the speed of adjustment from one level to another, when stopping supply of steam preferably may preferably be much higher than when the steam is supplied. The reason is as mentioned above that is steam is supplied too quickly it may cause pressure pulses that may cause damages to sealings, whereas when stopping the steam supply there is no risk that sealings will be damaged, even if the adjustment occurs quickly.

Accordingly, by means of an adjustable member 76 as mentioned above it is possible to individually optimize steam supply for each soot blower which may provide significant savings in regard to use of steam and also safeguard that sufficient cleaning of the heat surfaces are performed within the furnace.

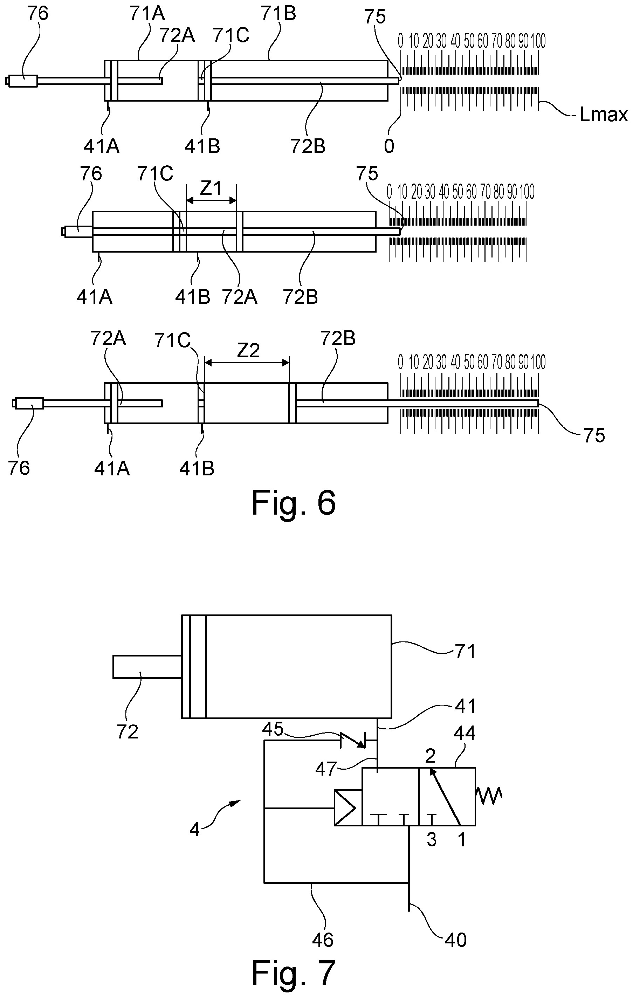

In Fig. 5 and 6 there are schematically shown a modified embodiment of an adjustment arrangement 7, according to the invention, wherein, if there is use of a single cylinder 71 it may be arranged with the same kind of adjustment mechanism 78 as described in relation to Fig.3. However, preferably there is arranged a double piston cylinder 71A, **71B,** in order to achieve the desired advantage of being able to position the valve 3 in at least three different positions, as is described in detail in relation to Fig. 6.

As already mentioned above the inventive solution may include using a poppet valve 3 and using the power the spring 31 thereof to return the piston rod to its non-pressurized position. However, in the embodiment shown in Fig. 5 (now describing an embodiment having a single piston cylinder 71 that is not shown in Fig 5) the spring 31 may be mounted internally (not shown) and acting in an opposite direction, i.e. pulling the valve stem. The control member 32, here also in the form of a pivot lever 32 (referred to as lever below), is also here connected to the movable member 70 by means of a pivot attachment 75 to facilitate movement/positioning of the valve stem 30. Further, in this embodiment the adjustment arrangement 7 has one end 162 thereof fixedly attached at a fixed part 1 of the sootblower.

Further, the movable member 70 is fixedly attached to the housing of the piston cylinder 71 (i.e. a single piston cylinder unit 71, not shown in Fig. 5) accordingly moves with the housing of the piston cylinder 71 to thereby control the valve 3, by pivoting the lever 32. It is shown that a rod device 16 is at said outer end 162 attached to a fixed/stationary part 10 of the soot blower 1 and at the other end to the piston rod 72 of the piston cylinder 7. The rod device 16 includes a pivotal part 161 that at the outer end 162 is attached to an outer pivot device 10 and at the other end 161 to an inner pivot device 163, which inner pivot device 163 is attached to the piston rod 72, preferably by means of an intermediate attachment 164 (e.g. threaded) that provides for length adjustability. Accordingly, the moveable member 70 may be moved forth and back by means of movement of the piston rod 72 of the piston cylinder unit 7, wherein when the piston rod 72 is pushed out the lever 32 will pivot around pivot point 34 and lift the valve stem 30 to open the valve 3, against the force of the inner valve spring. It is foreseen that a divisional application may be filed regarding the latter novel design without any limitation to the use in connection with soot blowers that may be positioned in three different positions.

Further, it is evident that the basic principle shown in Fig. 5 may also be achieved by an inverted positioning of the piston cylinder 71, i.e. where a pulling piston rod 72 is used, implying that the piston cylinder is positioned adjacent the stationary part 1 of the assembly, e.g. in place of pivotal part 161.

In Fig. 6 there is shown an adjustment arrangement as indicated in Fig. 5, wherein there is use of two serially connected pneumatic cylinders 71A, 71B, wherein a first piston rod 72A of an outer cylinder 71A may push a second piston rod 72B of an inner cylinder 71B a distance Z1 that is less than the full stroke Z2 of that piston rod 72B, which is achieved by means of a dividing wall 71C with a through hole dividing the two cylinders, wherein the front end of the first piston rod 71B may pass through the through hole. The reason for having two pneumatic cylinders 71A, 71B is to make it feasible to arrange for positioning the lever 32 of the poppet valve 3 in a non-fully opened position and also fully closed and fully opened as indicated in the three views in Fig. 6.

In the upper view none of the cylinders 71A, 71B have been activated and accordingly the valve 3 is maintained in its closed position. In the intermediate figure the outermost cylinder 71A has been activated and caused the first piston rod 72A to pass through the dividing wall 71C and move the second piston rod 72B thereby moving the pivot point 75 a distance Z1 to provide a low flow of steam from the poppet valve 3. The amount of opening may be controlled by a stop member 76, which stop member 76 preferably is adjustably attached at the outer end of the first piston rod 72A (e.g. threaded onto the first rod 72A). In the lower view, the second piston cylinder 71B has been activated and accordingly the movement will occur a distance Z2 as far as possible to fully open the poppet valve 3. It is evident that different valve arrangements may be used to control the arrangement shown in Fig.6, e.g. a directional valve that either activates first piston 72A via its inlet 41A or into the opposite direction into inlet 41B, e.g. in connection with an on off valve of pressure. It is evident that this valve arrangement may be achieved in various ways.

In Fig. 7 there is shown a pneumatic booster device 4 which may safeguard reliable operation of a soot blower. The reason of using a booster device 4 is that in some installations the valve 3 may have eroded or otherwise being affected such that extremely high force is needed to open the valve 3. In such a situation it may occur that the pressure supply via the pneumatic system, which normally does not exceed 7 bar may not be sufficient to open the valve.

In order to safeguard opening of the poppet valve also in such situations the booster installation 4 solves this problem by the use of pneumatic circuit 4 including a check valve 45. Thanks to the use of the pneumatic circuit with its check valve 45 the volume that is closed in the piston cylinder 71 and in the connected inlet 41 is drastically reduced in comparison with the traditional amount of volume, which also will include the pneumatic supply lines from the pneumatic connection box which normally is many meters, i.e. mostly implying a reduction of the volume by at least 50%. Accordingly, thanks to having a limited volume locked within the system by means of the check valve 45 there will be a quick increase of the counter pressure within the piston cylinder 71 thereby drastically increasing the force being applied by means of the movable member 71 onto the lever 32.

In Fig. 7 there is also shown a preferred embodiment of such a pneumatic circuit 4. It comprises a 3-2 valve 44 which is spring operated into one direction. i.e. to the lefthand side shown in Fig. 5. The spring-operated valve 44 has its opposing end connected to the pressure line 46 and accordingly when pressure is supplied via the pressure supply 40 pressure will enter into pressure line 46 and arrange for moving the 3-2 valve 44 to the right against the spring. Further, pressure line 46 is connected to the check valve 45 providing pressure in a direction which is the direction possible to provide flow through the check valve 45. The outlet end of the check valve 45 is connected to the supply inlet 41 of the piston cylinder 71. Further the outlet line 47 from the piston cylinder is in this situation blocked by means of the 3-2- valve 44. Accordingly, when pressure is supplied via the pressure source line 40 the valve 44 will position as shown in Fig. 5 and pressure will be applied to the piston cylinder 71 and a limited volume will be blocked by means of the check valve 45, which does not allow flow in the counter direction therethrough.

When pressure supply is stopped, i.e. no pressure via line 40 and the pressure will also escape from line 46 and accordingly the 3-2 valve will move leftwards by means of the spring and thereby allowing air to escape from the piston cylinder 71 via connection 2-1 of the valve 44.

It is foreseen that the booster device may be used also in other applications than that what has been described above. It may be used in connection with any movable device wherein adjustability is desired and wherein pneumatic power device is involved in release of a valve controlling device, e.g. a lever 32. As a consequence, it is foreseen that a divisional application may be filed without any limitation to the use in connection with soot blowers or even without any connection to any furnace but a protection that merely focuses om the ability of increasing applied force/pressure by means of a very cost efficient pneumatic circuit.

Hence separate protection for the booster device may be generally described as any kind of actuation/control device including a piston/cylinder 71 connected to a remote pressure source 40, wherein there is including a pneumatic circuit 4 being positioned adjacent the inlet 41 of said piston/cylinder 71, said pneumatic circuit 4 including a check valve 45 and an adjustably positioned valve 44, wherein said circuit4 is arranged to enable pressure to be supplied to said piston/cylinder 71 when the pressure source 40 is connected to said pneumatic circuit 4 and simultaneously block pressure from escaping from said piston/cylinder 71 via said blocking check valve 45 and said adjustably positioned valve 44 when positioned in a blocking position, and preferably arranged by means of said adjustably positioned valve 44 to enable pressure to escape from said piston/cylinder 71 when the pressure source 40 is disconnected whereby the adjustably positioned valve 44 is positioned in an open position.

The present invention is not restricted to the preferred embodiments described above but can be varied within the scope of the appended claims. For example, the invention may be used for rebuilding existing sootblowing systems of the kind having a front system and a rear system, where the systems may operate with mutual differing steam pressures, and the sootblowers in one system may be operated independently of those in the other system. Moreover, the skilled person realizes that there are a big variety of options for optimizing the operation of the sootblowing system, by means of using a computerized automated control system being supplied with sensing signals of a big variety of possible sensor devices, e.g. optical sensors sensing position of different objects, temperature sensors, pressure sensors, inductive sensors, etc. Moreover, it is evident that the invention is not restricted to use for recovery boilers, but that it may provide corresponding advantages also in other applications where similar problems exist, e.g. other type of boilers and/or chemical reactors. Nor is the invention restricted to use of steam as cleaning/cooling media, but as is evident also other medias may be used, e.g. air as cooling/cleaning media.

## Claims

1. A sootblower arrangement for a boiler/furnace, comprising a base frame (10), a moveable carriage (14) supported by the frame (10), a motor (2) for moving the carriage (14), a lance tube (11) mounted on the carriage (14) to be insertable into and retractable from the boiler/furnace, said lance tube (11) having at least one nozzle (12), and a steam feed tube (50, 51) connected to the lance tube (11) for feeding sootblowing steam to be ejected through said at least one nozzle (12) into the boiler/furnace, said steam feed tube (50, 51) having a first valve (3) for admitting steam through said at least one nozzle (12), when the carriage with the lance tube (11) is in an active position, i.e. during retraction and/or introduction of the lance tube (11), wherein there is arranged an adjustment arrangement (7) including a movable member (70), arranged to be movable between a first and a second end position by means of a first power mechanism (71), which movable member (70) is mechanically connected by means of a pivot device (75) to a control member (32) arranged to move/position a closure means (30) of said valve (3) into an open or closed position, facilitating closure of said valve (3) also when the lance tube (11) is in its activated position, **characterized in that** said adjustment arrangement (7) includes an adjustable member (76) that by means of a second power mechanism (78,71A/72A) arranged to operate independently in relation to said first power mechanism (71), and arranged to position said pivot device (75) in at least one intermediate position between said first and second end positions.

2. A sootblower arrangement as claimed in claim 1, **characterized in that** said adjustment arrangement (7) includes an adjustment mechanism (78) that is connected to a control system (6) including means enabling real-time control of the position of said adjustable member (76).

3. A sootblower arrangement as claimed in claim 1, **characterized in that** said pneumatic piston/cylinder (71) has a non-fixed position in relation to said base frame (10).

4. A sootblower arrangement as claimed in claim 3, **characterized in that** said pivot device (75) is slidably guided by means of a frame device (73) and in one direction is driven by a piston rod (72) having said frame device (73) fixedly attached to an end thereof where said piston rod (72) protrudes and at an opposite side to a movable rod device (16), which moveable rod device (16) in connection with start of the soot blower (1) is moved away from an inactive position into an active position.

5. A sootblower arrangement as claimed in claim 3, **characterized by** having a pivotal rod device (16) fixedly attached to said base frame (10) at one end and to a piston rod (72) at the other end and having said pivot device (75) fixedly attached to said piston/cylinder (71).

6. A sootblower arrangement as claimed in claim 5, **characterized by** having two serially connected piston/cylinders (71A, 71B) a first piston/cylinder (71A) arranged to position said pivot device (75) in an intermediate position and a second piston/cylinder (71B) arranged to position said pivot device (75) in a fully opened position of the valve (3).

7. A sootblower arrangement as claimed in any preceding claim,
**characterized in that** said pivot device (75) is urged to move into a closing position of the valve (3) by means of a spring force acting on said closure means (30).

8. A sootblower arrangement as claimed in any preceding claim,
**characterized in that** said piston/cylinder (71) is connected to a pressure source (40) via a pneumatic circuit (4) being positioned adjacent the inlet (41) of said piston/cylinder (71), said pneumatic circuit (4) including a check valve (45) and an adjustably positioned valve (44), wherein said circuit(4) is arranged to enable pressure to be supplied to said piston/cylinder (71) when the pressure source (40) is connected to said pneumatic circuit (4) and simultaneously block pressure from escaping from said piston/cylinder (71) via said check valve (45) and said adjustably positioned valve (44) when positioned in a blocking position, and preferably arranged by means of said adjustably positioned valve (44) to enable pressure to escape from said piston/cylinder (71) when the pressure source (40) is disconnected whereby the adjustably positioned valve (44) is positioned in an open position.

9. A method of operating a sootblowing system of a boiler/furnace, according to claim 1, including the following steps, -initializing sootblowing and positioning the movable member (70) of said adjustment arrangement (7) in a first position providing a first level (L0) of steam supply during a first path (a-b) of the outward travel, - positioning the movable member (70) of said adjustment arrangement (7) in a second position providing a second level (L1) of steam supply during a second path (b-c) of the outward travel and positioning the movable member (70) of said adjustment arrangement (7) in a third position providing a third level (Lmax) of steam supply during a major path (d-e) of the inward travel.

10. A method according to claim 9, wherein in at least one of the adjustments from said first to said second level (L0-L1) or from said second level to said third level (L1-Lmax) is performed over time (c-d) to achieve a successive increase of the steam pressure, preferably the increase (dP) is less than 10 bar/s.

11. A method according to claim 9 or 10, wherein in a final step (e-f) of the inward travel, positioning the movable member (70) of said adjustment arrangement (7) in a position providing a lower level (L4) of steam supply than said third level (Lmax), wherein preferably said lower level is the same as the first level (L0).
